# EUROPÄISCHE PATENTANMELDUNG

(11) **EP 1 642 793 A1**
(43) Veröffentlichungstag der Anmeldung: **05.04.2006**
(21) Anmeldenummer: 04104817.4
(22) Anmeldetag: 01.10.2004
(51) Int. Cl.: B60T 8/00, B60R 21/01

(54) **Notbremssystem**

(71) Anmelder: Ford Global Technologies, LLC, A subsidary of Ford Motor Company, Dearborn, MI 48126 (US)
(72) Erfinder: Schroeder, Claus, 53721, Siegburg (DE)
(74) Vertreter: Drömer, Hans-Carsten

(57) **Zusammenfassung**

Die Erfindung betrifft ein Kraftfahrzeug mit einem Sicherheitssystem. Dem Sicherheitssystem ist eine Detektionseinheit zugeordnet, so daß Fahrzeugreifen eines nach Überschreiten der physikalischen Grenzwerte als verloren geltenden Kraftfahrzeugs bremsblockierbar sind. Das Sicherheitssystem kann eine Fahrdynamikregelung und/oder ein passives Sicherheitssystem aufweisen.

## Beschreibung

Die Erfindung betrifft ein Kraftfahrzeug mit einem Sicherheitssystem.

Derartige Kraftfahrzeuge mit einem Sicherheitssystem sind bekannt, wobei das Sicherheitssystem zum einen eine Fahrdynamikregelung und zum anderen ein passives Sicherheitssystem aufweisen kann. Systeme, deren Ziel die Unfallvermeidung ist, wie beispielsweise eine Fahrdynamikregelung, zählen zu den aktiven Sicherheitssystemen. Ein Hauptziel der Fahrdynamikregelung besteht darin, einen Fahrer in kritischen Fahrsituationen zu unterstützen, so daß ein folgenschwerer Unfall vermieden werden kann. Systeme, die eine Kollision detektieren und aufgrund dessen aktiviert werden, fallen in den Bereich der passiven Sicherheit (beispielsweise Airbag, Gurtstraffer usw.). Ihre Aufgabe liegt darin, im Falle einer Kollision die Verletzungsgefahr der Insassen zu minimieren.

Bestandteile der Fahrdynamikregelung sind beispielsweise elektronische Stabilitätsprogramme (ESP), Antiblockier-Systeme (ABS), Antischlupfregelungen (ASR) oder auch Motorschleppmomentenregelungen (MSR). Diese beispielhaften Bestandteile der Fahrdynamikregelung können miteinander kombiniert sein, so daß dem Fahrer die Kontrollierbarkeit des Fahrzeuges gesichert ist, wenn durch den Abgleich der Fahrsignalwerte ein Eingreifen der Fahrdynamikregelung während der Fahrt des Kraftfahrzeugs notwendig ist, also eine Gefahrsituation droht.

Die Notwendigkeit des Eingreifens aktiver Sicherheitssysteme im fahrdynamischen Grenzbereich erklärt sich beispielsweise dadurch, daß einem durchschnittlichen Fahrer die Kenntnisse und Erfahrungen des Fahrzeugverhaltens an einem physikalischen Grenzbereich fehlen, so daß er durch falsche Reaktion die Situation zusätzlich verschlimmern würde. In derartigen Situationen kann der Fahrer die Kontrolle über das Fahrzeug verlieren mit dem Ergebnis, daß das Fahrzeug wie ein Katapult unkontrolliert herumgeschleudert wird, wobei der Fahrer lediglich als passiver Passagier anzusehen ist, der die Situation nicht mehr im Griff hat. Diese Situationen können z. B. Aquaplaning, eine zu kräftige Lenkreaktion, Rutschen auf Schnee, ein abruptes Wechseln der Fahrbahn, um Unfälle zu vermeiden, oder Kollisionen bzw. Unfälle, beispielsweise ein Stoßimpuls sein. Der Stoßimpuls ist selbstverständlich derart, daß der Fahrer die Kontrolle über das Kraftfahrzeug verlieren kann. Für den Fall, daß der Fahrer die Kontrolle über das Fahrzeug verliert, wird das Fahrzeug quer über alle Fahrbahnen von einer Leitplanke zur anderen Leitplanke und wieder zurück quer über alle Fahrbahnen geschleudert, wobei das Risiko besteht, mit anderen Kraftfahrzeugen zusammenzustoßen.

Die Fahrdynamikregelung hat sich in der Praxis zur Stabilisierung des Kraftfahrzeuges während der Fahrt des Kraftfahrzeuges bewährt. Allerdings bewirkt die Fahrdynamikregelung lediglich eine Stabilisierung des Kraftfahrzeuges, bevor das Kraftfahrzeug entgültig als verloren gilt, also bevor das Kraftfahrzeug die physikalischen Grenzwerte überschreitet.

Von daher liegt der Erfindung die Aufgabe zugrunde, ein Kraftfahrzeug mit einem verbesserten Sicherheitssystem zur Verfügung zu stellen, bei dem ein als verloren geltendes Kraftfahrzeug stabilisiert und kontrollierbar gemacht werden kann, wobei mit einfachsten Mitteln ein Unfallablauf erheblich entschärft werden soll.

Erfindungsgemäß wird die Aufgabe durch eine dem Sicherheitssystem derart zugeordnete Detektionseinheit gelöst, das Fahrzeugreifen eines als verloren geltenden Kraftfahrzeugs bremsblockierbar sind.

Der Erfindung liegt die Erkenntnis zugrunde, daß ein schleuderndes Fahrzeug durch die drehenden Reifen, die beispielsweise durch ein Antiblockier-System ja gerade nicht blockiert werden, eine kreisbogenähnliche Schleuderbewegung ausführt, bis das Kraftfahrzeug beispielsweise an einer Leitplanke anstößt, von dieser zurückkatapultiert wird und auf einer wiederum kreisbogenähnlichen Bewegungsbahn zur beispielsweise gegenüberliegenden Leitplanke schleudert. Bei blockierten Rädern dagegen würde das Kraftfahrzeug in einer definierten geraden Richtung rutschen. Diese definierte gerade Richtung ist im Sinne der Erfindung nicht unbedingt als eine Richtung Längs der Fahrbahn anzusehen. Um eine Blockade der Fahrzeugreifen zu erwirken, greift daher die erfindungsgemäße Detektionseinheit bei Erreichen von grenzwertigen Fahrsignalwerten derart in die Fahrdynamikregelung ein, daß das Antiblockier-System deaktiviert wird, so daß die Fahrzeugreifen bei einem als verloren geltenden Fahrzeug zum blockieren gebracht werden können.

Hierdurch schleudert das Kraftfahrzeug nicht mehr auf einer kreisbogenähnlichen Bewegungsbahn, sondern aufgrund einer Vektoraufteilung, beispielsweise hervorgerufen durch einen Stoßimpuls, auf einer resultierenden geraden Bewegungsbahn, der definierten geraden Richtung. Damit wird das katapultähnliche Herumschleudern des Kraftfahrzeuges vermieden.

Zweckmäßig im Sinne der Erfindung ist, wenn die Detektionseinheit als Fahrsignalwert beispielsweise eine Istgierrate des Kraftfahrzeuges mit einer Sollgierrate des Kraftfahrzeuges abgleicht, so daß bei Überschreiten der Sollgierrate durch die Istgierrate das Antiblockier-System deaktiviert wird. Von daher ist es zweckmäßig, wenn die Detektionseinheit einem Giersensor zugeordnet ist. Denkbar ist aber auch, als grenzwertigen Fahrsignalwert die Querbeschleunigung des vorderen Fahrzeugabschnittes bzw. die Querbeschleunigung des hinteren Fahrzeugabschnittes zu verwenden. Hierzu sind günstigerweise Querbeschleunigungssensoren sowohl dem vorderen Fahrzeugabschnitt als auch dem hinteren Fahrzeugabschnitt zugeordnet.

Ein zusätzlicher Fahrsignalwert neben der Gierrate bzw. dem Gierwinkel und den Beschleunigungssensoren kann zusätzlich auch sein, wenn ein vorbestimmter Bremsdruck detektiert wird, so daß bei Überschreiten des vorbestimmten Bremsdruckes das Antiblockier-System deaktiviert wird. Zweckmäßig ist aber auch, wenn vorgesehen wird, daß die Detektionseinheit das Antiblockier-System deaktiviert, wenn ein vorgegebener Schwimmwinkel des Kraftfahrzeuges von einem Istschwimmwinkel überschritten wird. Möglich ist, den Schwimmwinkel beispielsweise mit Hilfe von variablen, ermittelten Größen wie Fahrgeschwindigkeit und Querbeschleunigung, die dem Schwimmwinkel sehr nahe kommen, zu ermitteln, so daß diese in die Detektionseinheit zur Deaktivierung des Antiblockier-Systems mit einfließen können.

Selbstverständlich ist es möglich, daß die Detektionseinheit nicht nur das Antiblockier-System deaktiviert, sondern vielmehr selbst eine Blockade der Fahrzeugreifen bewirkt, wenn das Kraftfahrzeug als verloren gilt. Günstig im Sinne der Erfindung ist daher, wenn die Detektionseinheit beispielsweise als Notbremseinrichtung der Fahrdynamikregelung zugeordnet ist.

Möglich ist, daß das Kraftfahrzeug ein passives Sicherheitssystem, beispielsweise Airbags, Gurtstraffer usw. aufweist, wobei auf eine Fahrdynamikregelung verzichtet wurde. Um bei derartigen Kraftfahrzeugen den Unfallablauf zu entschärfen, bzw. das als verloren geltende Kraftfahrzeug dennoch stabilisieren zu können, ist es günstig im Sinne der Erfindung wenn die Detektionseinheit dem passiven Sicherheitssystem zugeordnet ist, so daß bei einer Ansteuerung des passiven Sicherheitssystems eine Blockade der Kraftfahrzeugreifen ausgelöst wird. Hierbei ist vorteilhaft vorgesehen, daß die Detektionseinheit automatisch eine Blockierbremsung des als verloren geltenden Kraftfahrzeugs auslöst, wenn beispielsweise der Airbag ausgelöst wird, z.B nachdem das Kraftfahrzeug. auf ein erstes Hindernis geprallt ist. Besonders vorteilhaft bei dieser Ausgestaltung der Erfindung ist, daß die Detektionseinheit kostengünstig in die bereits bestehenden passiven Sicherheitssysteme einbindbar ist. Hierbei kann auf eine Bestimmung, ob das Kraftfahrzeug als verloren gilt verzichtet werden, da bei dem beispielhaften Auslösen des Airbags automatisch eine Bremsblockierung der Kraftfahrzeugreifen ausgelöst wird. Üblicherweise liegt nämlich bei auslösendem Airbag ein als verloren geltendes Kraftfahrzeug vor. Mittels der Detektionseinheit wird eine erhebliche Schadensbegrenzung erreicht, da durch die blockierten Fahrzeugreifen eine maximale Verzögerung des Kraftfahrzeugs einsetzt, so daß ein größerer Teil der nach dem Einschlag bzw. dem Aufprall vorhandenen (Rest-)Energie, bzw. bei einem möglichen weiteren Einschlag bzw. Aufprall freiwerdende kinetische Energie vernichtet wird. Damit wird der Unfallablauf erheblich entschärft, selbst wenn das Kraftfahrzeug keine Fahrdynamikregelung aufweist.

Selbstverständlich ist es möglich, die Detektionseinheit bei Kraftfahrzeugen mit einem Sicherheitssystem, das sowohl die Fahrdynamikregelung als auch das passive Sicherheitssystem aufweist entsprechend zuzuordnen.

Weitere vorteilhafte Ausgestaltungen der Erfindung sind in den Unteransprüchen und der folgenden Figurenbeschreibung offenbart. Es zeigen:
- Fig.1 1: Eine Schleuderbewegung eines Kraftfahrzeuges mit einer herkömmlichen Fahrdynamikregelung,
- Fig. 2: ein stabilisiertes Kraftfahrzeug mit der erfindungsgemäßen Detektionseinheit.

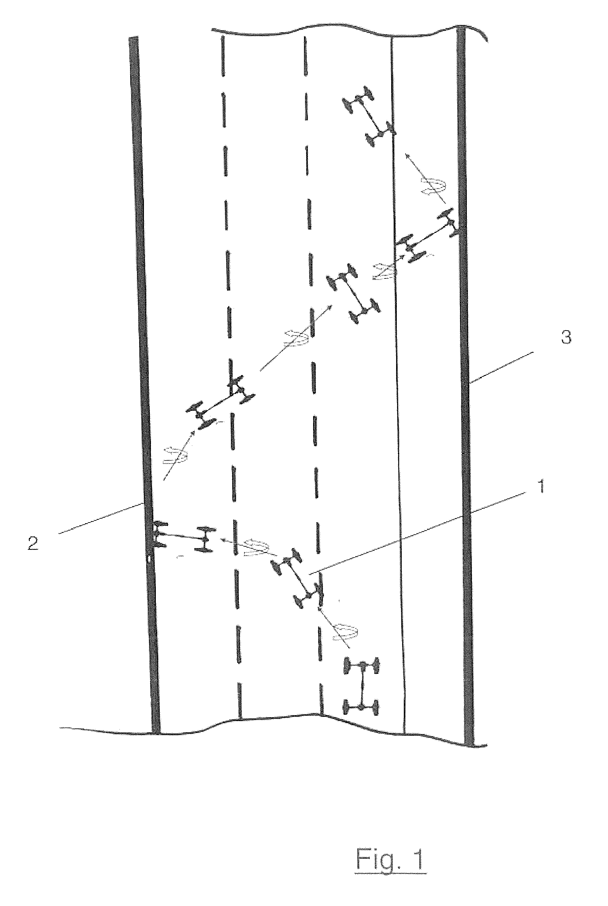

Figur 1 zeigt ein Kraftfahrzeug 1 mit einer nicht dargestellten Fahrdynamikregelung. Die Fahrdynamikregelung weist beispielsweise ein Antiblockier-System, ein elektronisches Stabilitätsprogramm, eine Antischlupfregelung und/oder eine Motorschleppmomentenregelung auf. Dies sind lediglich einige beispielhafte Systeme, die in Kombination miteinander die Kontrollierbarkeit des Fahrzeugs 1 sichern sollen. In Figur 1 ist das Kraftfahrzeug 1 als verloren geltendes Kraftfahrzeug dargestellt. Das als verloren geltende Kraftfahrzeug erhielt beispielsweise einen Stoßimpuls und schleudert auf einer bogenähnlichen Bewegungsbahn zu einer ersten Leitplanke 2, von der es abprallt und wie ein Katapult zu einer zur ersten Leitplanke 2 gegenüberliegenden zweiten Leitplanke 3 gelangt. Durch die Fahrdynamikregelung, insbesondere durch das Antiblockier-System, werden Fahrzeugreifen nicht blockiert, so daß de ren Drehbewegung die bogenähnliche Bewegungsbahn hervorrufen.

Bei der in Figur 1 dargestellten katapultähnlichen Bewegung des Kraftfahrzeuges 1 schräg über alle Fahrbahnen ist es leicht vorstellbar, daß das Kraftfahrzeug mit anderen Fahrzeugen zusammenstoßen kann, da das als verloren geltende Kraftfahrzeug unkontrollierbar ist.

Das dargestellte Kraftfahrzeug 1 weist eine Fahrdynamikregelung auf, die das Kraftfahrzeug in fahrdynamischen Grenzbereichen stabilisiert, indem Fahrsignalwerte der Fahrdynamik in Abgleich gebracht werden.

Ein Hauptziel der Fahrdynamikregelung besteht darin, einen Fahrer in kritischen Fahrsituationen zu unterstützen, so daß ein folgenschwerer Unfall vermieden werden kann. Systeme, deren Ziel die Unfallvermeidung ist, zählen zu den aktiven Sicherheitssystemen. Systeme, die eine Kollision detektieren und aufgrund dessen aktiviert werden, fallen in den Bereich der passiven Sicherheit (beispielsweise Airbag, Gurtstraffer usw.). Ihre Hauptaufgabe liegt darin, im Falle einer Kollision die Verletzungsgefahr der Insassen zu minimieren.

Die Notwendigkeit des Eingreifens aktiver Sicherheitssysteme im fahrdynamischen Grenzbereich ist sinnvoll und erklärt sich beispielsweise dadurch, daß einem durchschnittlichen Fahrer die Kenntnisse und Erfahrungen des Fahrzeugverhaltens am physikalischen Grenzbereich fehlen, so daß er durch falsche Reaktion die Situation zusätzlich verschlimmern würde. Mittels der bereits erwähnten Fahrdynamikregelung soll die Kontrollierbarkeit des Fahrzeuges gesichert werden, wobei selbstverständlich bei Überschreitung physikalischer Grenzwerte das Kraftfahrzeug als verloren gilt, so daß auch die Fahrdynamikregelung keine Kontrollierbarkeit des Kraftfahrzeuges mehr zur Verfügung stellen kann.

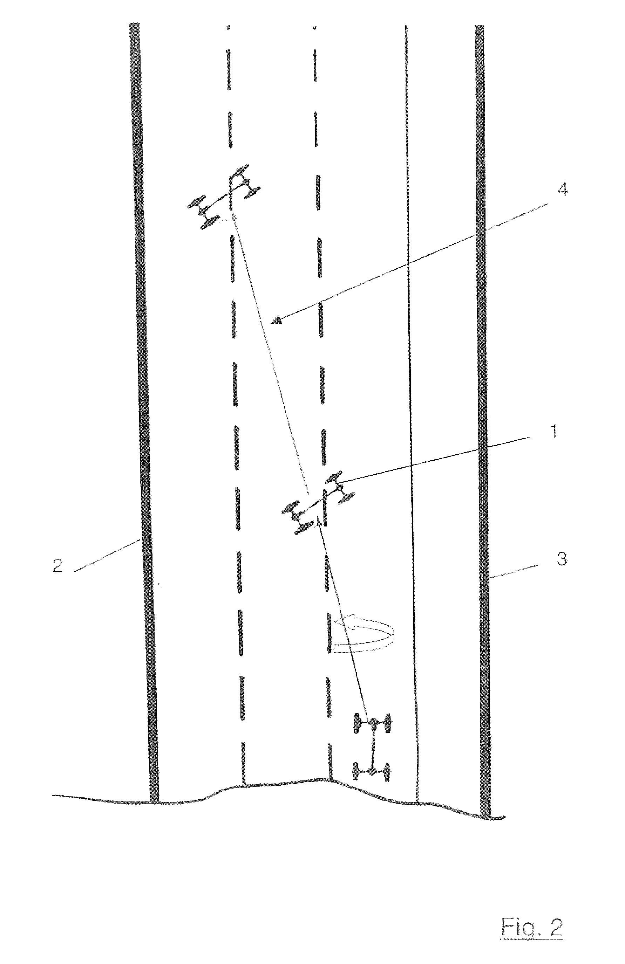

In Figur 2 weist die Fahrdynamikregelung des Kraftfahrzeuges 1 eine erfindungsgemäß zugeordnete Detektionseinheit auf. Auch in Figur 2 ist das Kraftfahrzeug 1 ein als verloren geltendes Kraftfahrzeug. Im Gegensatz zu Figur 1 schleudert das als verloren geltende Kraftfahrzeug aber nicht auf einer bogenähnlichen Bewegungsbahn, sondern rutscht in einer definierten geraden Richtung 4. Dies wird dadurch erreicht, daß die erfindungsgemäße Detektionseinheit das Antiblockier-System bei verloren geltendem Kraftfahrzeug deaktiviert. Hierdurch wird erreicht, daß die Fahrzeugreifen blockiert werden und sich nicht mehr drehen. Damit wird einer beispielsweise in Figur 1 dargestellten bogenähnlichen Bewegungsbahn entgegengewirkt, so daß sich die aus beispielsweise einem Stoßimpuls ergebende Vektorbahn bzw. definierte gerade Richtung 4, wie in Figur 2 dargestellt, ergibt.

Die Detektionseinheit kann beispielsweise als Notbremseinrichtung angesehen werden, die nicht nur das Antiblockier-System deaktiviert, wobei der Fahrer die Blockierbremsung selbst durch entsprechendes Betätigen eines Bremspedals auslösen kann. Denkbar ist vielmehr auch, die Detektionseinheit derart wirken zu lassen, daß im Falle des verloren gegangenen Fahrzeuges die Fahrzeugreifen direkt blockiert werden, so daß eine automatische Notbremseinrichtung zur Verfügung steht, ohne daß der Fahrer ein Bremspedal betätigt.

Damit kann mittels der Detektionseinheit ein Einschlag bzw. ein Aufprall verhindert werden. Zumindest kann bei einem möglichen Einschlag bzw. Aufprall ein Einfallswinkel verkleinert werden, so daß Unfallfolgen minimiert werden. Insofern kann die Detektionseinheit als passives Sicherheitssystem angesehen werden, da die Detektionseinheit im Falle des als verloren geltenden Kraftfahrzeuges die Verletzungsgefahr von Insassen und auch von Insassen anderer Kraftfahrzeuge minimiert.

Möglich ist, daß die Detektionseinheit direkt passiven Sicherheitssystemen wie z.B. Airbags, Gurtstraffer usw. zugeordnet ist. Diese Ausführung ist in den Figuren nicht dargestellt. Es ist aber leicht vorstellbar, daß beispielsweise bei einem Auslösen des Airbags mittels der Detektionseinheit eine automatische Blockierbremsung der Kraftfahrzeugreifen ausgelöst wird.

## Patentansprüche

1. Kraftfahrzeug mit einem Sicherheitssystem **gekennzeichnet durch** eine dem Sicherheitssystem derart zugeordnete Detektionseinheit, daß Fahrzeugreifen eines als verloren geltenden Kraftfahrzeugs bremsblockierbar sind.

2. Kraftfahrzeug nach Anspruch 1,
**dadurch gekennzeichnet, daß**
das Sicherheitssystem eine Fahrdynamikregelung aufweist, der zumindest ein Antiblockier-System zugeordnet ist, wobei die Fahrdynamikregelung das Kraftfahrzeug während der Fahrt mittels Abgleich von Fahrsignalwerten stabilisiert, und wobei die Detektionseinheit zumindest das Antiblockier-System bei Überschreitung von grenzwertigen Fahrsignalwerten deaktiviert.

3. Kraftfahrzeug nach Anspruch 2,
**dadurch gekennzeichnet, daß**
die Detektionseinheit als Fahrsignalwert eine Istgierrate mit einer Sollgierrate abgleicht, so daß bei Überschreiten der Sollgierrate zumindest das Antiblockier-System deaktiviert wird.

4. Kraftfahrzeug nach einem der Ansprüche 1 bis 3,
**dadurch gekennzeichnet, daß**
die Detektionseinheit einem Giersensor zugeordnet ist.

5. Kraftfahrzeug nach einem der Ansprüche 1 bis 4,
**dadurch gekennzeichnet, daß**
die Detektionseinheit als Notbremseinrichtung ausgestaltet ist.

6. Kraftfahrzeug nach einem der vorhergehenden Ansprüche,
**dadurch gekennzeichnet, daß**
das Sicherheitssystem ein passives Sicherheitssystem aufweist, dem zumindest ein Airbag zugeordnet ist, wobei die Detektionseinheit zumindest bei einem Auslösen des Airbags eine Bremsblockierung der Fahrzeugreifen auslöst.
